# EUROPÄISCHE PATENTANMELDUNG

(11) **EP 4 474 213 A1**
(43) Veröffentlichungstag der Anmeldung: **11.12.2024**
(21) Anmeldenummer: 24174121.4
(22) Anmeldetag: 03.05.2024
(51) Int. Cl.: B60P 3/34, B60P 3/36, B60P 3/39

(54) **CAMPINGFAHRZEUG MIT VARIABLEM LAGERRAUM**

(30) Priorität: 06.06.2023 DE 102023114892
(71) Anmelder: Knaus Tabbert AG, 94118 Jandelsbrunn (DE)
(72) Erfinder: Leijendekkers, Ernst, 4902 ZN Oosterhout (NL)
(74) Vertreter: advotec.

(57) **Zusammenfassung**

Die Erfindung betrifft ein Campingfahrzeug, insbesondere Wohnwagen, Wohnmobil (100), Campingbus oder dergleichen mit einem Fahrzeuginnenraum (1), welcher einen Wohnabschnitt (2) und einen an den Wohnabschnitt (2) angrenzenden Lagerabschnitt (3) umfasst, wobei der Wohnabschnitt (2) eine Sitzgruppe (4) mit mindestens einem Sitzbankelement (5a, 5b) umfasst, welches vom Wohnabschnitt (2) in den Lagerabschnitt (3) und umgekehrt bewegbar ist, wobei sich das mindestens eine Sitzbankelement (5a, 5b) in einer Gebrauchsstellung im Wohnabschnitt befindet und wobei sich das mindestens eine Sitzbankelement in einer Transportstellung im Lagerabschnitt (3) befindet und im Wohnabschnitt (2) eine Transportfläche (11) und einen Transportraum (12) für Fahrräder (21), Campingmöbel oder sonstiges Transportgut freigibt.

## Beschreibung

Die vorliegende Erfindung betrifft ein Campingfahrzeug, insbesondere Wohnwagen, Wohnmobil, Campingbus oder dergleichen mit einem Fahrzeuginnenraum, welcher einen Wohnabschnitt und einen an den Wohnabschnitt angrenzenden Lagerabschnitt umfasst.

Derartige Campingfahrzeuge sind aus dem Stand der Technik bekannt. In diesen Fahrzeugen ist der zur Verfügung stehende Platz oft sehr begrenzt. Es besteht daher der Wunsch, den verfügbaren Raum möglichst gut zu nutzen, wobei die unterschiedlichen Räume, wie beispielsweise Wasch-, Schlaf-, Wohn- sowie Lagerraum in platzsparender Weise miteinander kombiniert sind, um mehr Platz für den Wohn-/Schlafraum zur Verfügung zu haben. Aufgrund des beschränkten Platzangebotes in Campingfahrzeugen wird der Lagerraum häufig sehr klein ausgeführt, was dazu führt, dass wenig Raum zum Mitführen von Gegenständen, wie beispielsweise Fahrrädern oder dergleichen verbleibt.

Zudem ergeben sich auch im Campingfahrzeugbereich, insbesondere im Wohnwagensegment neue Herausforderungen durch vollelektrische Zugfahrzeuge. So hängt die Reichweite des Zugfahrzeugs unter anderem von der Stirnfläche des Anhängers ab. Durch eingeschränkte Anhängelasten der E-Fahrzeuge ist es auch nicht mehr möglich, Wohnwägen mit hohem Volumen und Gewicht zu ziehen. Aus diesem Grunde muss zum einen die Stirn- und Grundfläche reduziert werden, zum anderen auch das Gewicht der Fahrzeuge. Ein Grundziel besteht daher darin, bei möglichst kleiner Grundfläche des Fahrzeugs möglichst viel Nutzfläche zur Verfügung zu stellen.

Der vorliegenden Erfindung liegt die Aufgabe zugrunde, ein Campingfahrzeug zur Verfügung zu stellen, welches die genannten Nachteile der bekannten Fahrzeuge überwindet. Der Erfindung liegt insbesondere die Aufgabe zugrunde, ein Campingfahrzeug zur Verfügung zu stellen, bei dem trotz eines großzügig angelegten Wohn-/Schlafraums genügend Platz für Transportgut, wie z.B. Fahrräder, Campingmöbel oder dergleichen zur Verfügung steht. Der "Wohn-/Schlafabschnitt" wird nachfolgend als Wohnabschnitt bezeichnet.

Diese Aufgabe wird gemäß Anspruch 1 durch ein Campingfahrzeug der eingangs genannten Art gelöst, bei dem der Wohnabschnitt eine Sitzgruppe mit mindestens einem Sitzbankelement umfasst, welches vom Wohnabschnitt in den Lagerabschnitt und umgekehrt bewegbar ist, wobei sich das mindestens eine Sitzbankelement in einer Gebrauchsstellung im Wohnabschnitt befindet und wobei sich das mindestens eine Sitzbankelement in einer Transportstellung im Lagerabschnitt befindet und im Wohnabschnitt eine Transportfläche und einen Transportraum für Fahrräder, Campingmöbel oder sonstiges Transportgut freigibt.

Beim erfindungsgemäßen Fahrzeug lässt sich schnell und einfach ein Bereich des Wohnabschnitts in einen Transportraum, beispielsweise für Fahrräder verwandeln. Damit können beispielsweise Fahrräder sicher im Innenraum des Campingfahrzeugs transportiert werden und müssen nicht mehr umständlich an einem außen am Fahrzeug angeordneten Fahrradträger montiert werden. Dies ermöglicht einen sichereren Transport, bei dem die Fahrräder auch vor Umwelteinflüssen, wie beispielsweise Regen oder Schnee geschützt sind. An einem Zielort angekommen, lässt sich der Transportraum schnell und einfach wieder als Wohnraum umgestalten, indem lediglich das mindestens eine Sitzbankelement nach dem Herausnehmen der Fahrräder oder sonstigem Transportgut wieder vom Lagerabschnitt in den Wohnabschnitt bewegt wird.

Beim erfindungsgemäßen Campingfahrzeug ist also der Transportraum Teil des Wohnabschnitts. Er erlangt seine Funktion, also Aufnahme von Transportgut, erst, nachdem das mindestens eine Sitzbankelement in den Lagerabschnitt bewegt worden ist. In der Regel umfasst die Sitzgruppe zwei sich gegenüberliegende bewegbare Sitzbankelemente, um einen möglichst komfortablen Wohnabschnitt zur Verfügung zu stellen.

Eine besonders bevorzugte Ausführungsform des erfindungsgemäßen Campingfahrzeugs ist gekennzeichnet durch eine, vorzugsweise zwischen den sich gegenüberliegenden Sitzbankelementen angeordnete Tischplatte, die in einer Gebrauchsstellung mindestens teilweise in den Transportraum ragt und in einer Transportstellung im Wesentlichen außerhalb des Transportraums und vorzugsweise vertikal angeordnet ist und vorzugsweise einen Teil einer Trennwand zwischen dem Lagerraum und dem Transportraum bildet. Auf diese Art und Weise nimmt die Tischplatte in der Transportstellung so gut wie keinen Platz in Anspruch. Vielmehr wird freier Platz für den nun zur Verfügung stehenden Transportraum geschaffen.

Mit Vorteil ist die Tischplatte zur Überführung von der Transportstellung in die Gebrauchsstellung und umgekehrt klappbar ausgebildet. Dies erlaubt einen schnellen und einfachen Umbau von einer Transportstellung in eine Gebrauchsstellung und umgekehrt.

Eine besonders bevorzugte Ausführungsform des erfindungsgemäßen Campingfahrzeugs ist gekennzeichnet durch ein Klappbett, welches in einer Ruhestellung zumindest teilweise im Wesentlichen senkrecht zum Fahrzeugboden angeordnet ist und eine Trennwand zwischen dem Wohnabschnitt und dem Lagerabschnitt bildet, und zur Überführung in eine horizontale Gebrauchsstellung in den Transportraum klappbar ist. Mit einem derartigen Klappbett, welches in einer Ruhestellung eine Trennwand zwischen dem Wohnabschnitt und dem Lagerabschnitt bildet, lässt sich der im erfindungsgemäßen Campingfahrzeug zur Verfügung stehende Raum noch weiter optimieren.

Mit Vorteil weist das Klappbett einen horizontal im Lagerabschnitt angeordneten Frontabschnitt sowie einen, schwenkbar mit dem Frontabschnitt verbundenen Trennabschnitt auf, welcher Trennabschnitt in einer Ruhestellung senkrecht zum Fahrzeugboden und als Trennwand zwischen dem Wohnabschnitt und dem Lagerabschnitt angeordnet ist und zur Überführung in eine Schlafstellung von einer vertikalen Position in eine horizontale Position bringbar ist.

Mit Vorteil ist die Tischplatte an einer Unterseite des Klappbetts schwenkbar gelagert. Bei dieser Ausführungsform bildet das Klappbett in einer Ruhestellung in Kombination mit der hochgeklappten Tischplatte eine gemeinsame Trennwand zwischen dem Lagerabschnitt und dem Wohnabschnitt. Ferner ist es denkbar, dass die Tischplatte oder ein kompletter Tisch, welcher im Bereich des Sitzbankelements angeordnet ist, horizontal in einen vorderen oder hinteren Abschnitt des Campingfahrzeugs verschiebbar ist, um den Lagerraum freizugeben.

Mit Vorteil ist an mindestens einer Stirnseite des Transportraums eine Tür in der Fahrzeugwand angeordnet. Diese Tür dient als eine Art Garagentür, durch welche Transportgut, insbesondere Fahrräder, in den Transportraum des erfindungsgemäßen Campingfahrzeugs ein- und ausgebracht werden kann.

Eine bevorzugte Ausführungsform des erfindungsgemäßen Campingfahrzeugs ist gekennzeichnet durch mindestens ein im Bereich des Transportraums angeordnetes Befestigungselement, insbesondere eine auf der Transportfläche angeordnete Halteschiene und/oder seitlich angeordnete Zurrelemente zum temporären Befestigen von Transportgut, insbesondere von Fahrrädern. Derartige Befestigungselemente tragen zu einem sicheren Transport des mitgeführten Transportguts bei,
Mit Vorteil ist das mindestens eine Sitzbankelement als Kasten, Truhe, Schublade oder dergleichen ausgebildet, auf welchem vorzugsweise ein Polsterelement angeordnet ist. Mit einem derartigen Sitzbankelement ist es möglich, weiteren Stauraum für Transportgut zu schaffen. In der Transportstellung befindet sich dieses als Kasten, Truhe, Schublade oder dergleichen ausgebildete Sitzbankelement im Lagerabschnitt und ist in der Regel mit Transportgut gefüllt.

Weitere Merkmale der Erfindung ergeben sich aus der nachfolgenden Beschreibung von bevorzugten Ausführungsbeispielen der Erfindung in Verbindung mit den Zeichnungen und den Unteransprüchen. Hierbei können die einzelnen Merkmale für sich allein oder in Kombination miteinander verwirklicht sein.

In den Zeichnungen zeigen:
- Fig. 1:: eine Draufsicht auf ein erfindungsgemäßes Campingfahrzeug im Bereich des Lagerabschnitts und des daran angrenzenden Wohnabschnitts in einer Gebrauchsstellung der Sitzmöbel und der Tischplatte;
- Fig. 2:: eine perspektivische Darstellung der Situation von Fig. 1;
- Fig. 3:: perspektivische Darstellung gemäß Fig. 2 beim Schaffen eines Transportraums;

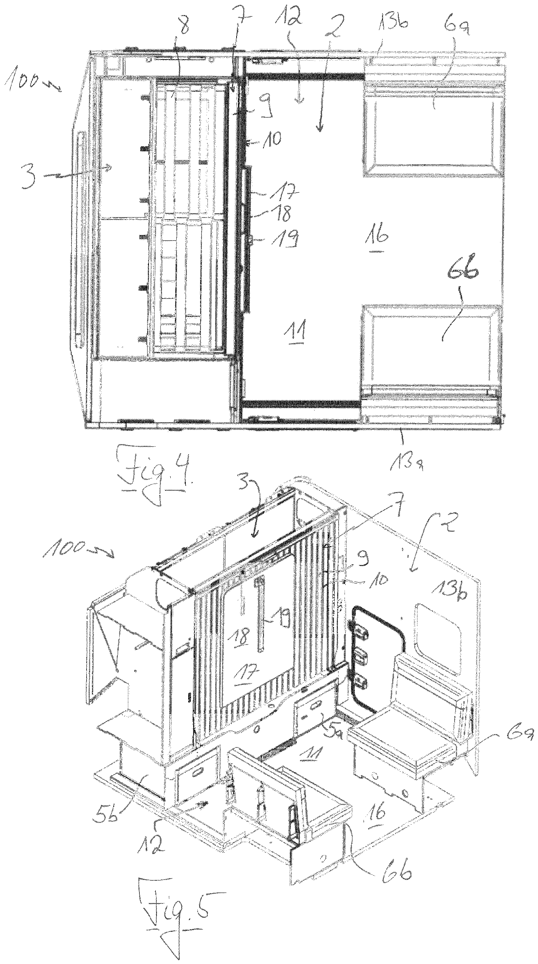

- Fig. 4:: eine Draufsicht auf das Campingfahrzeug gemäß Fig. 1 in einer Transportstellung der Sitzmöbel und der Tischplatte;
- Fig. 5:: eine perspektivische Darstellung der Situation von Fig. 4;
- Fig. 6:: eine Draufsicht gemäß Fig. 4 mit im Transportraum angeordnetem Fahrrad;
- Fig. 7:: eine perspektivische Darstellung der Situation von Fig. 6;
- Fig. 8:: einen Längsschnitt durch das erfindungsgemäße Fahrzeug mit abgeklapptem Klappbett;
- Fig. 9:: eine perspektivische Darstellung der Situation von Fig. 8;
- Fig. 10:: eine Draufsicht auf die Unterseite des senkrecht stehenden Klappbetts gemäß den Figuren 4 und 5;
- Fig. 11:: einen Schnitt entlang der Linie A-A von Fig. 10

Vorliegend werden gleiche oder funktionsgleiche Elemente mit den gleichen Bezugszeichen gekennzeichnet.

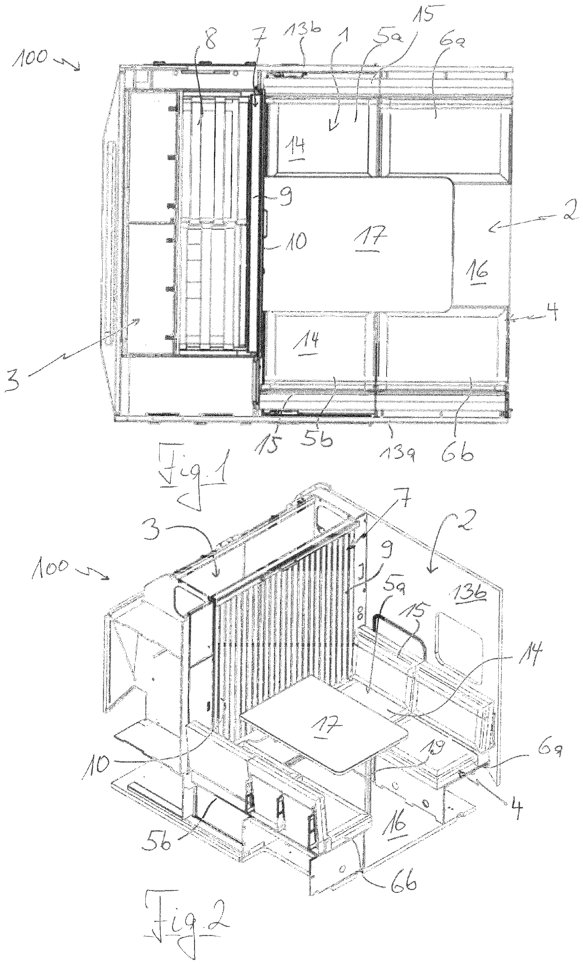

Die Figuren 1 und 2 zeigen ein erfindungsgemäßes Campingfahrzeug 100 mit einem Fahrzeuginnenraum 1, welcher einen Wohnabschnitt 2 und einen an den Wohnabschnitt 2 angrenzenden Lagerabschnitt 3 umfasst. Vom Wohnabschnitt 2 ist in den vorliegenden Darstellungen lediglich ein hinterer Teil mit einer Sitzgruppe 4 dargestellt. Die Sitzgruppe 4 umfasst zwei hintere, an den Lagerabschnitt 3 angrenzende Sitzbankelemente 5a und 5b. An die Sitzbankelemente 5a und 5b grenzt jeweils ein weiteres Sitzbankelement 6a und 6b. Die Sitzbankelemente 5a und 6a bilden ebenso wie die Sitzbankelemente 5b und 6b jeweils eine Sitzbank, welche für jeweils zwei Personen eine Sitzmöglichkeit bietet. Somit können auf der Sitzgruppe 4 insgesamt mindestens vier Personen Platz nehmen.

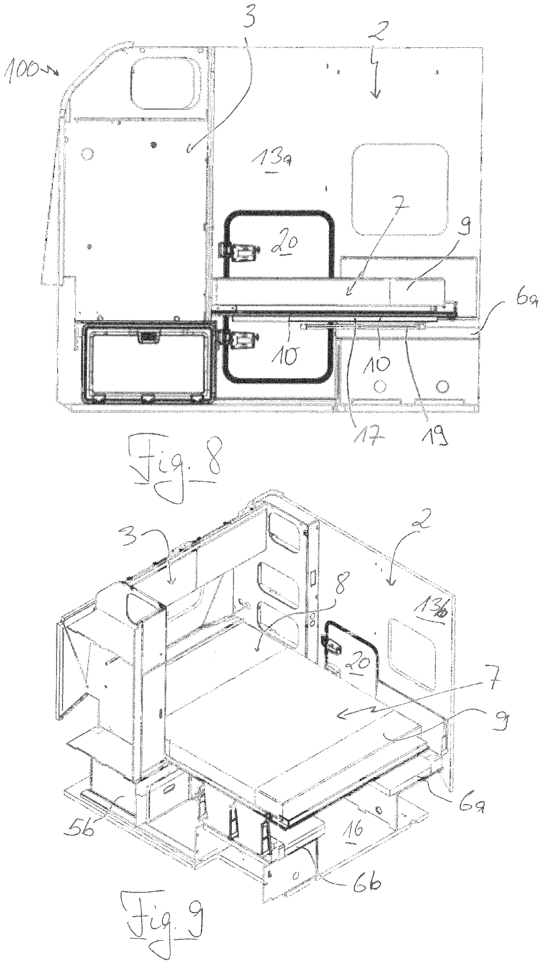

In der in den Figuren 1 und 2 dargestellten Situation ist der Wohnabschnitt 2 vom Lagerabschnitt 3 durch einen vertikal angeordneten Abschnitt 9 eines Klappbetts 7 getrennt. Das Klappbett 7 fungiert also in der in den Figuren 1 und 2 dargestellten Stellung als Trennwand zwischen dem Wohnabschnitt 2 und dem Lagerabschnitt 3. Wie insbesondere aus den Figuren 1 und 9 hervorgeht, ist ein Frontabschnitt 8 des Klappbetts 7 horizontal angeordnet und schließt mit dem vertikal angeordneten und eine Trennwand bildenden Abschnitt 9 des Klappbetts 7 einen im Wesentlichen rechten Winkel ein.

Auf der Unterseite 10 des Abschnitts 9 des Klappbetts 7 ist eine schwenkbar gelagerte Tischplatte 17 angeordnet. Die Tischplatte 17 befindet sich in der in den Figuren 1 und 2 dargestellten Situation in einer abgeklappten Gebrauchsstellung, in welcher Gegenstände wie z.B. Speisen auf der Tischplatte 17 positioniert und von den auf der Sitzgruppe 4 sitzenden Personen konsumiert werden können. Im Lagerabschnitt 3 können natürlich Gegenstände aller Art, wie z.B. Taschen, Werkzeug etc. gelagert werden.

Nachfolgend wird nun erläutert, wie ein Teil des Wohnabschnitts 2 in eine sog. Transportstellung überführt werden kann, um eine Transportfläche und einen Transportraum für Fahrräder, Campingmöbel oder dergleichen zu schaffen.

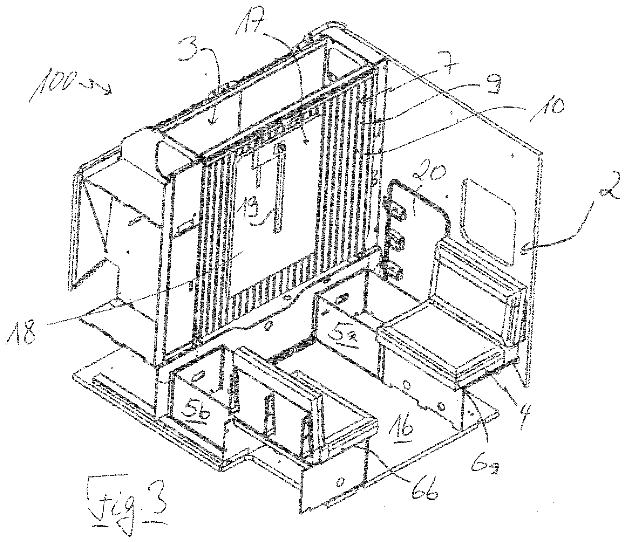

Hierzu wird gemäß Fig. 3 zunächst die Tischplatte 17 von einer horizontalen Stellung in eine vertikale Stellung hochgeklappt, sodass diese parallel zur Unterseite 10 des vertikalen Abschnitts 9 des Klappbetts 7 angeordnet ist. In dieser Stellung kann die Tischplatte 17 durch entsprechende Befestigungsmittel, wie beispielsweise Klammern, Schlaufen oder dergleichen am horizontalen Abschnitt 8 des Klappbetts 7 befestigt werden. Wie in den Figuren 2 und 3 zu erkennen ist, weist die Tischplatte auf ihrer Unterseite 18 ferner ein ein- und ausklappbares Tischbein 19 auf, welches zu einer Stabilisierung der Tischplatte 17 in der Gebrauchsstellung beiträgt.

Wie aus den Figuren 1 und 2 hervorgeht, sind auf den Sitzbankelementen 5a und 5b sowie 6a und 6b in der Gebrauchsstellung jeweils Sitzpolster 14 sowie Rückenlehnenpolster 15 angeordnet. Wie in der Fig. 3 zu sehen ist, werden zur Schaffung eines Transportraums die Sitz- und Rückenlehnenpolster 14 und 15 der Sitzbankelemente 5a und 5b entfernt. Wie aus der Fig. 3 auch deutlich hervorgeht, handelt es sich bei den Sitzbankelementen 5a und 5b um schubladenartige Kästen, welche zusätzlichen Stauraum bieten.

Zur endgültigen Herstellung der Transportstellung werden nun die Sitzbankelemente 5a und 5b in den Lagerabschnitt 3 verschoben, wo sie unterhalb des Frontalabschnitts 8 des Klappbetts 7 Platz finden. Zum Verschieben der Sitzbankelemente 5a und 5b sind diese in Schienen geführt, welche am Fahrzeugboden 16 angeordnet sind und zugleich als Zurrschienen im Transportmodus genutzt werden können. Durch das Bewegen der Sitzbankelemente 5a und 5b in den Lagerabschnitt 3 und das Hochklappen der Tischplatte 17 wird eine Transportfläche 11 sowie ein Transportraum 12 für Fahrräder oder sonstiges Transportgut freigegeben.

In den Seitenwänden 13a und 13b des Wohnmobils 100 sind im Bereich des Transportraums 12 zwei sich gegenüberliegende Garagentüren 20 angeordnet. Über diese Garagentüren 20 lässt sich Transportgut, wie beispielsweise ein Fahrrad 21 ein- bzw. ausbringen.

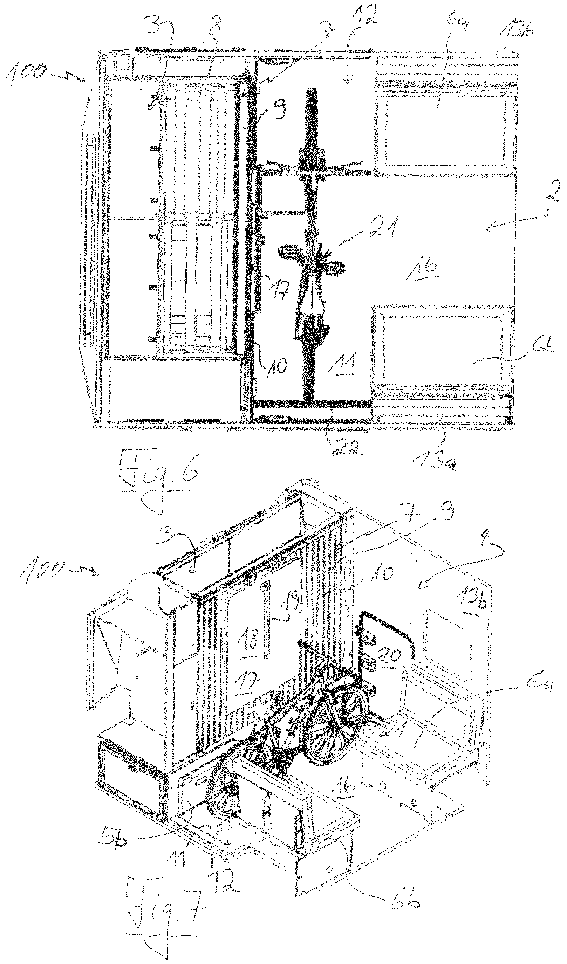

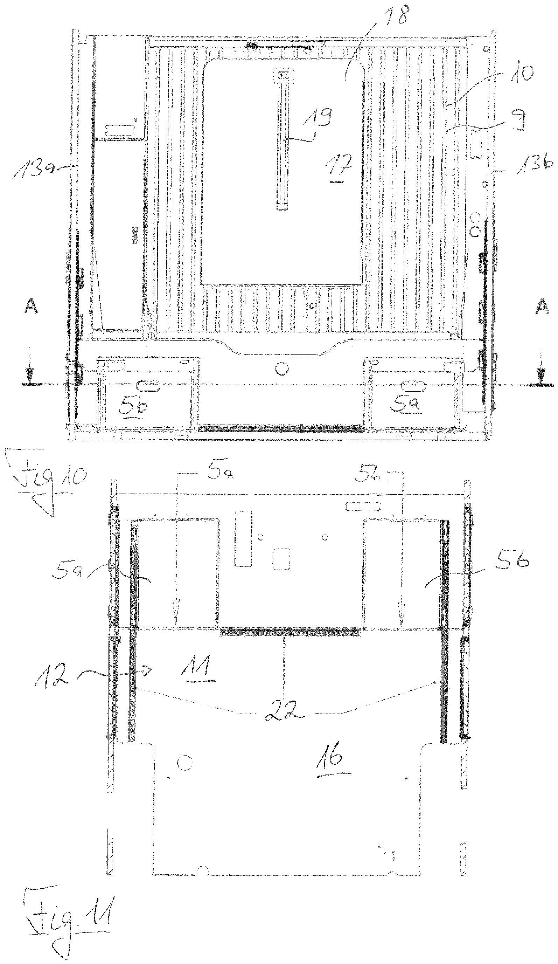

In den Figuren 6 und 7 ist der Innenraum 1 des Wohnmobils 100 mit Transportraum 12 dargestellt, in welchem ein Fahrrad 21 angeordnet ist. Zur Befestigung des Fahrrads 21 im Transportraum 12 während des Transportes sind im Bereich des Transportraums Zurrelemente in Form von Zurrschienen 22 angeordnet. Diese sind insbesondere in der Fig. 11 gut zu erkennen. Mit Hilfe dieser Zurrschienen 22 und entsprechendem Bandmaterial lässt sich das Fahrrad 21 sicher und fest im Transportraum 12 fixieren, sodass ein sicherer Transport des Fahrrads 21, beispielsweise bei einer An- oder Heimreise gewährleistet ist. Am Zielort angekommen, kann das Fahrrad 21 von den Zurrelementen wieder gelöst werden und aus einer der Garagentüren 20 ins Freie gefahren werden. Anschließend müssen nur die Sitzbankelemente 5a und 5b wieder aus dem Lagerabschnitt 3 in den Wohnabschnitt 2 bewegt werden und die Tischplatte 17 von einer vertikalen Stellung in eine horizontale Stellung abgeklappt werden. Somit kann der Transportraum 12, welcher ohnehin Teil des Wohnabschnitts 2 ist, schnell und einfach zu Wohnraum umfunktioniert werden.

In den Figuren 8 und 9 ist das Klappbett 7 im ausgeklappten Zustand zu erkennen. Dieses Klappbett 7 umspannt den kompletten Bereich der Sitzgruppe 4 und füllt auch den Lagerabschnitt 3 größtenteils aus. Somit bietet das Klappbett 7 eine untypisch große Liegefläche, welche sehr gut zugänglich ist.

## Patentansprüche

1. Campingfahrzeug, insbesondere Wohnwagen, Wohnmobil (100), Campingbus oder dergleichen mit einem Fahrzeuginnenraum (1), welcher einen Wohnabschnitt (2) und einen an den Wohnabschnitt (2) angrenzenden Lagerabschnitt (3) umfasst, wobei der Wohnabschnitt (2) eine Sitzgruppe (4) mit mindestens einem Sitzbankelement (5a, 5b) umfasst, welches vom Wohnabschnitt (2) in den Lagerabschnitt (3) und umgekehrt bewegbar ist, wobei sich das mindestens eine Sitzbankelement (5a, 5b) in einer Gebrauchsstellung im Wohnabschnitt befindet und wobei sich das mindestens eine Sitzbankelement (5a, 5b) in einer Transportstellung im Lagerabschnitt (3) befindet und im Wohnabschnitt (2) eine Transportfläche (11) und einen Transportraum (12) für Fahrräder (21), Campingmöbel oder sonstiges Transportgut freigibt.

2. Campingfahrzeug nach Anspruch 1, **dadurch gekennzeichnet, dass** die Sitzgruppe (4) zwei sich gegenüberliegende bewegbare Sitzbankelemente (5a, 5b) umfasst.

3. Campingfahrzeuge nach einem der Ansprüche 1 oder 2, insbesondere nach Anspruch 2, **gekennzeichnet durch** eine, vorzugsweise zwischen den sich gegenüberliegenden Sitzbankelementen (5a, 5b) angeordnete Tischplatte (17), die in einer Gebrauchsstellung mindestens teilweise in den Transportraum (12) des Wohnabschnitts (2) ragt und in einer Transportstellung im Wesentlichen außerhalb des Transportraums (12) angeordnet ist.

4. Campingfahrzeug nach Anspruch 3, **dadurch gekennzeichnet, dass** die Tischplatte (17) zur Überführung von der Transportstellung in die Gebrauchsstellung und umgekehrt klappbar ausgebildet ist, wobei die Tischplatte (17) vorzugsweise ein an seiner Unterseite (18) angeordnetes klappbares Tischbein (19) aufweist.

5. Campingfahrzeug nach einem der vorhergehenden Ansprüche, **gekennzeichnet durch** ein Klappbett (7), welches in einer Ruhestellung zumindest teilweise senkrecht zum Fahrzeugboden (16) angeordnet ist und eine Trennwand zwischen dem Wohnabschnitt (2) und dem Lagerabschnitt (3) bildet, und zur Überführung in eine horizontale Gebrauchsstellung in den Wohnabschnitt, insbesondere den Transportraum klappbar ist.

6. Campingfahrzeug nach einem der vorhergehenden Ansprüche, insbesondere nach Anspruch 5, **dadurch gekennzeichnet, dass** die Tischplatte (17) an einer Unterseite (10) des Klappbetts (7) schwenkbar gelagert ist.

7. Campingfahrzeug nach einem der Ansprüche 5 oder 6, **dadurch gekennzeichnet, dass** das Klappbett (7) einen horizontal im Lagerabschnitt angeordneten Frontabschnitt (8) sowie einen, schwenkbar mit dem Frontabschnitt (8) verbundenen Trennabschnitt (9) aufweist, welcher Trennabschnitt (9) in einer Ruhestellung senkrecht zum Fahrzeugboden als Trennwand zwischen dem Wohnabschnitt und dem Lagerabschnitt (3) angeordnet ist und zur Überführung von der Ruhestellung in eine Schlafstellung von seiner vertikalen Position in eine horizontale Position bringbar ist.

8. Campingfahrzeug nach einem der vorhergehenden Ansprüche, **dadurch gekennzeichnet, dass** an mindestens einer Stirnseite des Transportraums (12) eine Tür (20) in der Fahrzeugwand (13a, 13b) angeordnet ist.

9. Campingfahrzeug nach einem der vorhergehenden Ansprüche, **gekennzeichnet durch** mindestens ein im Bereich des Transportraums angeordnetes Befestigungselement, insbesondere eine auf der Transportfläche (11) angeordnete Halteschiene und/oder ein seitlich angeordnetes Zurrelement (22) zum temporären Befestigen von Transportgut, insbesondere von Fahrrädern (21).

10. Campingfahrzeug nach einem der vorhergehenden Ansprüche, **dadurch gekennzeichnet, dass** das mindestens eine Sitzbankelement (5a, 5b) als Kasten, Truhe, Schublade oder dergleichen ausgebildet ist, auf welchem vorzugsweise ein Polsterelement (14) angeordnet ist.
